# EUROPEAN PATENT SPECIFICATION

(11) **EP 3 717 195 B1**
(45) Date of publication and mention of the grant of the patent: **07.06.2023**
(21) Application number: 17811391.6
(22) Date of filing: 29.11.2017
(51) Int. Cl.: B29C 33/48, B22C 9/10, B33Y 80/00, B29C 70/42, B29C 33/38, B29L 31/00

(54) **CORE ASSEMBLY FOR MOULDING AND METHOD OF MOULDING**
KERNANORDNUNG ZUM FORMEN UND VERFAHREN ZUM FORMEN
ENSEMBLE NOYAU POUR MOULAGE ET PROCÉDÉ DE MOULAGE

(43) Date of publication of application: 07.10.2020
(73) Proprietor: ST Engineering Aerospace Ltd., Singapore 539938 (SG)
(72) Inventor: HSI, Han Lin, Singapore 539938 (SG)
(74) Representative: Viering, Jentschura & Partner mbB Patent- und Rechtsanwälte
(86) International application number: PCT/SG2017/050585
(87) International publication number: WO 2019/108126

(56) References cited:
- DE-A1-102013 226 017
- DE-B4-102013 226 017
- GB-A- 1 271 557
- US-A- 5 407 508
- US-A- 5 433 902
- US-A1- 2012 319 324

## Description

### Technical Field

Embodiments generally relate to a core assembly for moulding and a method of moulding.

### Background

In the process of fabricating ducts and enclosures from composites like glass fiber or carbon fiber, a core or center mould representative of the final shape is required to allow the fibers to be laid over and resin applied. Afterwhich the resin will cure on the core or center mould, and the fiber and resin matrix will take the shape of the core or center mould as the final product is formed. Subsequently, the core or center mould is to be removed from the final product. However, difficulties in removal are often encountered and it would typically be challenging to remove the core or center mould from the final product. Some of the common methods used in the industry today include using soluble core, multipart core, or inflatable core, among others. In all the above methods, the core or center mould, which is usually lightly bonded to the encompassing part, is broken into smaller pieces or shrunk or dissolved so that it can be removed easily by sliding out or dissolving away from the final product.

In particular, for ducts which are curved or enclosure with odd shapes, the method of using a dissolving core is typically adopted because the multipart core and the inflatable core are not able to be effectively or efficiently removed after the final product has cured. However, dissolvable core generally requires a metal mould and resins to fabricate, involves chemicals and liquids, and is expensive.

One known soluble core/mandrel is the 'Aqua Mandrel', which is formed by pouring a wet paste (e.g. a water soluble mandrel tooling material) into a mould. Composite fibers material are then laid over the formed mandrel and allowed to cure. When the composite product is completed, the mandrel is then dissolved and drained from the insides of the finished composite product using water.

An example of a multipart core is in US patent number US 5,385,705 which discloses a reusable core apparatus for a casting mould. The reusable core includes multiple parts of various sizes and shapes with multiple securing or engaging or sliding mechanisms configured in various directions and dimensions such that the parts may joined together to form the desired shape and may be subsequently taken apart via sliding. However, as exemplified by the embodiment in US 5,385,705, it is rather complex and difficult to configure or create the multiple parts and the various engaging or sliding mechanisms of the multipart core. Further, for different curve ducts with different dimensions, curvatures, profiles etc., multiple parts with very different sizes and shapes as will as different engaging mechanisms may be required.

An example of an inflatable core is in US patent number US 5,262,121, which discloses a flexible hollow mould filled with some form of solid media like sand or beads and vacuum sealed to maintain its shape in order to be used as a core. Moulding materials may then be laid over the core and cured to form the final product. After the final product is formed, the sand or beads are poured out of the flexible mould and the flexible mould is removed. However, in forming the core with the flexible mould, it is rather challenging to fill the flexible mould and to vacuum seal the flexible mould at the same time to obtain the desired shape of the core required. Accordingly, such inflatable core may usually only be suitable for straight ducts or structures. US 5 407 508 A describes a method of producing a replaceable one piece annular outer race having an axial bore, an uninterrupted inner annular concave raceway facing into the bore and an outer surface. The method comprises the steps of applying an overlayment of filaments onto a cylindrical axially split mold assembly to form a one piece outer race substrate. US 5 433 902 A describes a mandrel for making a rigid tubular article that has integrally-formed straight and arcuate portions. The mandrel has a plurality of shape-providing elements slidably disposed on interconnected straight and arcuate rods. After a rigid tubular article has been formed about the mandrel, the shape-providing elements can be slid off the straight and arcuate rods so that the mandrel can be removed from the rigid tubular article's interior. US 2012/319324 A1 describes a molding system including a component formed in a generally closed loop shape and having a plurality of radially extending teeth. The component includes a plurality of discrete segments coupled together. GB 1 271 557 A describes deformable asbestos cement pipes of circular cross-section are shaped to a rectangular cross-section by inserting an expansible core comprising rails incorporating therebetween an expansible hose so that when compressed air is fed thereinto from one end the rails are forced apart against the pipe interior and one rail slides on bolts fixed to the other rail. DE 10 2013 226017 A1 describes a method for producing a blow core for fiber composite components of complex geometry and a blow core made from fiber composite material.

### Summary

According to one aspect of the present invention, there is provided a core assembly for moulding as defined in claim 1.

According to another aspect of the present invention, there is provided a method of moulding as defined in claim 11.

### Brief description of the drawings

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
FIG. 1A to FIG. 1E illustrate a method of moulding using a core assembly according to various embodiments;
FIG. 2 shows a core assembly and a twisted duct fabricated by the core assembly 200 according to various embodiments;
FIG. 3 shows a core assembly and a container with an opening fabricated by the core assembly according to various embodiments; and
FIG. 4 shows a schematic diagram of a method of moulding according to various embodiments.

### Detailed description

Embodiments described below in context of the apparatus are analogously valid for the respective methods, and vice versa. Furthermore, it will be understood that the embodiments described below may be combined, for example, a part of one embodiment may be combined with a part of another embodiment.

It should be understood that the terms "on", "over", "top", "bottom", "down", "side", "back", "left", "right", "front", "lateral", "side", "up", "down" etc., when used in the following description are used for convenience and to aid understanding of relative positions or directions, and not intended to limit the orientation of any device, or structure or any part of any device or structure. In addition, the singular terms "a", "an", and "the" include plural references unless context clearly indicates otherwise. Similarly, the word "or" is intended to include "and" unless the context clearly indicates otherwise.

Various embodiments of a core assembly for moulding and/or a method of moulding thereof have been provided to address at least some of the issues identified earlier. According to various embodiments, the core assembly may also be referred to as a core, a mould core, a core structure, etc.

Various embodiments seek to provide a core assembly and/or a method which is clean, cheap and able to cater to complex shapes of the product to be moulded or fabricated. Various embodiments also seek to provide a method of creating a core for the fabrication of composite ducts and enclosures that circumvent the problems and disadvantages of current methods used, by leveraging on the technology of 3D printing.

According to various embodiments a non-flexible multipart core is provided that allows for easy removal after use. According to various embodiments, the non-flexible multipart core may be applied to complex shapes and curved ducts, as long as there is an opening in the final fabricated product or the finished product to allow the small pieces of the core to be removed.

According to various embodiments, a core assembly may be made from multiple parts to form the shape of the final fabricated product. The difference between the core assembly according to the various embodiments and the conventional core is the provision of a round channel in the core assembly of the various embodiments whereby the round channel runs through the entire core assembly. This channel may be sized such that the multiple parts of the core assembly may collapse inwards and separate themselves from the inside surface of the finished product. The collapsing action may also separate adjacent parts of the core assembly so that each piece may be individually removed. To prevent the multiple parts of the core assembly from collapsing during use, a row of round bearings may be removably inserted into the channel to hold up the core assembly.

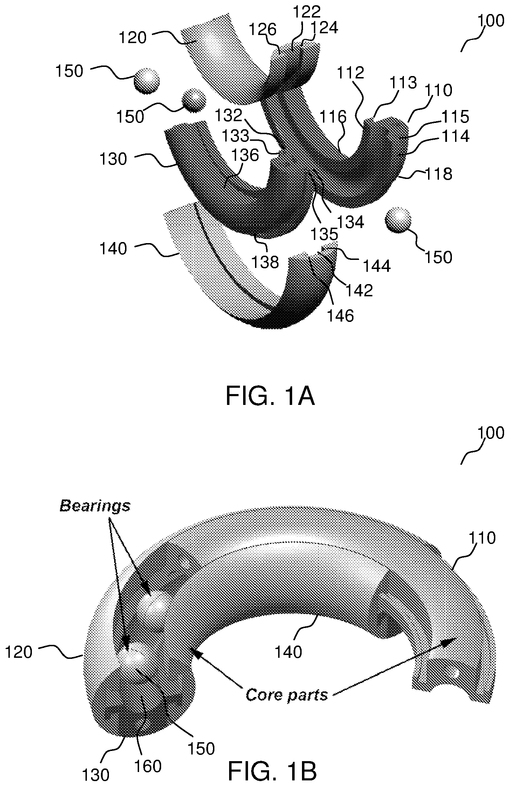

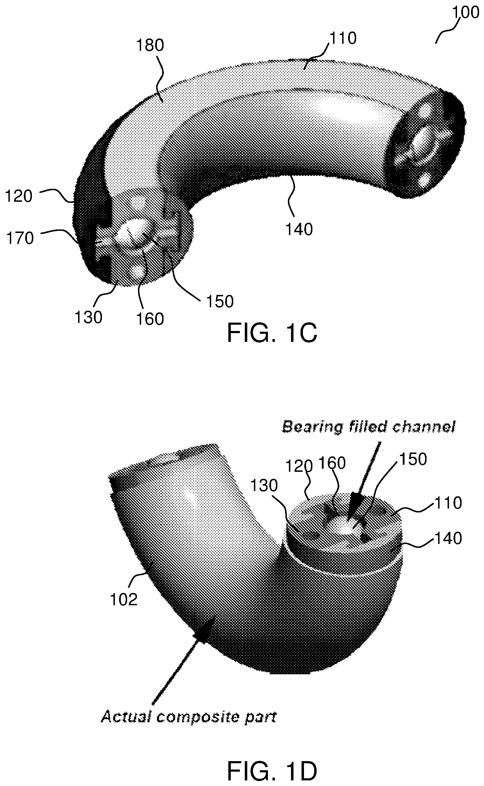

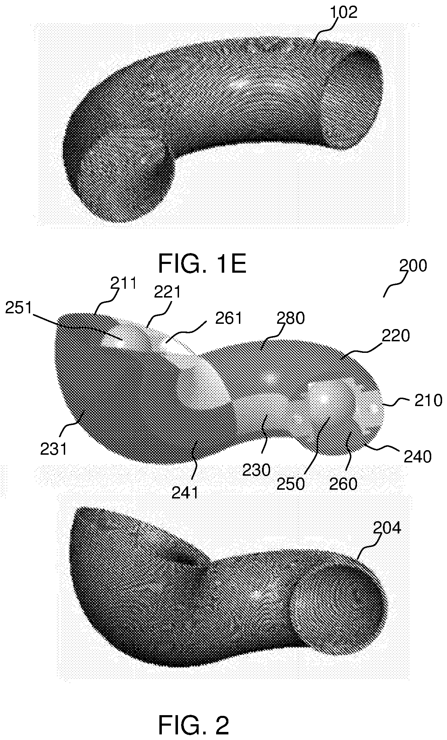

FIG. 1A to FIG. 1E illustrate a method of moulding using a core assembly 100 according to various embodiments. FIG. 1A shows the core assembly 100 in an unassembled state according to various embodiments. FIG. 1B shows the core assembly 100 being assembled according to various embodiments. FIG. 1C shows the core assembly 100 in an assembled state according to various embodiments. FIG. 1D shows a material being moulded on the core assembly 100 in the assembled state according to various embodiments. FIG. 1E shows the final moulded workpiece or the final fabricated product or the finished product removed from the core assembly 100 according to various embodiments.

The core assembly 100 as shown in FIG. 1A to FIG. 1D may be configured for fabricating a simple curve duct. To use the core assembly 100, a plurality of external parts (or a plurality of separable rigid parts 110, 120, 130, 140) may be first slid into place loosely, and then one or more bearings (or one or more inserts 150) may be removably inserted into a center channel (or a hollow channel 160) to push the parts 110, 120, 130, 140 of the core assembly 100 outwards. Interlocking grooves in each of the rigid parts 110, 120, 130, 140 may prevent the respective rigid parts 110, 120, 130, 140 from being pushed further away by the bearings than intended.

According to various embodiments, the core assembly 100 may include a plurality of separable rigid parts configured to be joined together to form the hollow channel 160 therebetween. According to various embodiments, the core assembly 100 may include two or more separable rigid parts, or three or more separable parts, or four or more separable parts, etc. depending on the configuration of the core assembly. As shown in FIG. 1A and FIG. 1C, the core assembly 100 for moulding may include four separable rigid parts 110, 120, 130, 140 configured to be joined together to form the hollow channel 160 therebetween. Accordingly, the core assembly 100 may include a first rigid part 110, a second rigid part 120, a third rigid part 130 and a fourth rigid part 140.

The first rigid part 110 may include a ledge 112 (or a flange or a projecting portion) along one side 116 of the first rigid part 110 and a further ledge 114 (or a further flange or a further projecting portion) along an opposite side 118 of the first rigid part 110. The ledge 112 may include a lip 113 and the further ledge 114 may also include a corresponding lip 115. Accordingly, the ledge 112 and the further ledge 114 may form a pair of gutter-like structures on each side 116, 118 of the first rigid part 110.

The third rigid part 130 may similarly include a ledge 132 (or a flange or a projecting portion) along one side 136 of the third rigid part 130 and a further ledge 134 (or a further flange or a further projecting portion) along an opposite side 138 of the third rigid part 130. The ledge 132 may include a lip 133 and the further ledge 134 may also include a corresponding lip 135. Accordingly, the ledge 132 and the further ledge 134 may form a pair of gutter-like structures on each side 136, 138 of the third rigid part 130.

The second rigid part 120 may include a T-shape slot 122. The T-shape slot 122 may be an elongated recess portion of the second rigid part 120 extending along a centerline of the second rigid part 120. The T-shape slot 122 may include two opposing grooves 124 and 126 along two opposing side walls of the elongated recess portion of the second rigid part 120.

The fourth rigid part 140 may similarly include a T-shape slot 142. The T-shape slot 142 may be an elongated recess portion of the fourth rigid part 140 extending along a corresponding centerline of the fourth rigid part 140. The T-shape slot 142 may include two opposing grooves 144 and 146 along two opposing side walls of the elongated recess portion of the fourth rigid part 140.

In joining the first rigid part 110 to the second rigid part 120, the ledge 112 of the first rigid part 110 may engage the groove 124 of the T-shape slot 122 of the second rigid part 120 to form an interlocking joint (or a tongue and groove joint). Similarly, the third rigid part 130 may join to the second rigid part 120 with the ledge 132 of the third rigid part 130 engaging the other groove 126 of the T-shape slot 122 of the second rigid part 120 to form a further interlocking joint (or a further tongue and groove joint). In joining the first rigid part 110 to the fourth rigid part 140, the further ledge 114 of the first rigid part 110 may engage the groove 144 of the T-shape slot 142 of the fourth rigid part to form another interlocking joint (or another tongue and groove joint). Similarly, the third rigid part 130 may join to the fourth rigid part 140 with the further ledge 134 of the third rigid part 130 engaging the other groove 146 of the T-shape slot 142 of the fourth rigid part 140 to form yet another interlocking joint (or yet another tongue and groove joint).

When the first rigid part 110, the second rigid part 120, the third rigid part 130 and the fourth rigid part 140 are joined in the manner above, the hollow channel 160 may be formed between the four rigid parts 110, 120, 130, 140. According to various embodiments, the hollow channel 160 may be along a centreline or in the centre or in the middle of the core assembly 100 in the assembled state. Further, the hollow channel 160 may also be a through channel 160 extending an entire length of the core assembly 100 in the assembled state.

According to various embodiments, in addition to using ledges 112, 114, 132, 134 and T-shape slots 122, 142 to interlock or join the rigid parts 110, 120, 130, 140 of the core assembly 100 together, other joining means such as strong magnets, temporary adhesives etc. or a combination thereof may be used.

According to various embodiments, the first rigid part 110, the second rigid part 120, the third rigid part 130 and the fourth rigid part 140 may be configured to be loosely joined together. Accordingly, the respective ledges 112, 114, 132, 134 and the respective T-shape slot 122, 142 may be configured to have a clearance fit, e.g. loose fit. Further, as shown in FIG. 1C, the first rigid part 110 and the third rigid part 130 may be configured such that a gap 170 may be formed between the first rigid part 110 and the third rigid part 130 when the four rigid parts 110, 120, 130, 140 are joined in the manner as described previously. Accordingly, due to the gap 170 and the loose fitting configuration, the first rigid part 110, the second rigid part 120, the third rigid part 130 and the fourth rigid part 140 may have the natural tendency to be disengaged or detached or separated from each other, and hence may be collapsible from a joined configuration.

According to various embodiments, to maintain the four rigid parts 110, 120, 130, 140 in the joined configuration such that they are joined together in the manner as described previously, the core assembly 100 may further include at least one insert 150 configured to be removably insertable into the hollow channel 160. According to various embodiments, the core assembly 100 may include one, or two, or three, or four, or more inserts. The at least one insert 150 may be configured to bear against at least two of the plurality of separable rigid parts so as to maintain the plurality of separable rigid parts in respective positions in the assembled state of the core assembly. According to various embodiments, the at least one insert may include a ball or a sphere or a bearing or an inflatable bag or an inflatable tube. As shown in FIG. 1A to FIG. 1D, the core assembly 100 may include a plurality of inserts 150 in the form of a plurality of ball bearings. As shown in FIG. 1C, the inserts 150 may be removably inserted into the hollow channel 160 and may bear against the first rigid part 110 and the third rigid part 130 such that the first rigid part 110 and the third rigid part 130 may be firmly engaged with the second rigid part 120 and the fourth rigid part 140. Accordingly, the plurality of inserts 150 may push apart the first rigid part 110 and the third rigid part 130 such that a pair of opposing forces may act on the second rigid part 120 and the fourth rigid part 140 so as to hold or retain the four rigid parts 110, 120, 130, 140 in a joined manner or in the joined configuration. Hence, the plurality of inserts 150 pushing apart the first rigid part 110 and the third rigid part 130 may cause the four rigid parts 110, 120, 130, 140 to remain or maintain in respective positions in the assembled state of the core assembly 100. Thus, the plurality of rigid parts 110, 120, 130, 140 may be configured such that the plurality of rigid parts 110, 120, 130, 140 may be joined in a way whereby the respective individual rigid part may be prevented from "exploding" outwards (or break away from each other in an outward direction) when the at least one insert 150 is inserted into the hollow channel 160 to bear against at least two of the plurality of rigid parts. On the other hand, the at least one insert 150 may be configured such that the at least one insert 150 may prevent the plurality of rigid parts 110, 120, 130, 140 from collapsing inwards (or falling toward each other in an inward direction) by pushing the plurality of rigid parts 110, 120, 130, 140 away from the center of the core assembly 100 when the at least one insert 150 is inserted into the hollow channel 160 to bear against at least two of the plurality of rigid parts.

According to various embodiments, an exterior surface 180 of the core assembly 100 in the assembled state may form the moulding surface to be moulded. The exterior surface 180 may define a predetermined desired inner surface of a cavity of the workpiece to be moulded or fabricated. As shown in FIG. 1D, a layer of moulding materials may be applied to the moulding surface defined by the exterior surface 180 of the core assembly 100. According to various embodiments, the layer of moulding materials may include a layer of fiber and resins matrix. Accordingly, after the layer of moulding materials is applied, the moulding materials may be left to cure on the core assembly 100. Subsequently, when the finished workpiece 102 is completed, the finished workpiece 102 may be separated or removed from the core assembly 100. FIG. 1E shows an example of the finished workpiece 102.

According to various embodiments, the plurality of separable rigid parts may be further configured to be collapsible into the hollow channel when the at least one insert is removed from the hollow channel for disassembling the core assembly. Hence, removing the at least one insert may cause the plurality of separable rigid parts to fall apart from the joined configuration of the plurality of separable rigid parts in the assembled state of the core assembly. Accordingly, with reference to FIG. 1A to FIG. 1D, the core assembly 100 may be disassembled by removing the plurality of inserts 150 such that the four rigid parts 110, 120, 130, 140 may be collapsible toward or into the hollow channel 160. For example, the first rigid part 110 may fall or may be collapsed into the hollow channel 160 and towards the third rigid part 130 such that the first rigid part 110 may be pulled out and removed from the finished workpiece 102. Subsequently, the third rigid part 130 may be removed by laterally moving or collapsing the third rigid part 130 into an enlarged space, which is free up from the removal of the first rigid part 110 and which may include the space previously forming the hollow channel 160, and then pulling out the third rigid part 130 from the finished workpiece 102. Following which, the second rigid part 120 may be removed in a similar fashion, followed by the fourth rigid part 140.

As shown in FIG. 1A to FIG. 1E, the core assembly 100 is used for fabricating a curve duct 102. Thus, the four rigid parts 110, 120, 130, 140 may be configured to be curved such that when they are joined together in the assembled state of the core assembly 100, the four rigid parts 110, 120, 130, 140 may form a curved exterior surface 180 of the core assembly 100 in the assembled state whereby the exterior surface 180 defines a predetermined desired inner surface of a cavity of the curve duct 102 to be moulded or fabricated.

According to various embodiments, the core assembly may be used for more complex shapes, by varying the diameter of the round channel in the center, and by configuring a path of the channel to hold up the various parts of the core, multi-turn ducts and enclosures.

FIG. 2 shows a core assembly 200 and a twisted duct 204 fabricated by the core assembly 200 according to various embodiments. As shown, the core assembly 200 may include a first rigid part 210, a second rigid part 220, a third rigid part 230 and a fourth rigid part 240 configured to be detachably joined together to form a first section of the core assembly 200, and a ffifth rigid part 211, a sixth rigid part 221, a seventh rigid part 231 and a eighth rigid part 241 configured to be detachably joined together to form a second section of the core assembly 200. When the first to the fourth rigid parts 210, 220, 230, 240 are detachably joined together, a hollow channel 260 may be formed therebetween. Similarly, when the fifth to the eighth rigid parts 211, 221, 231, 241 are detachably joined together, a hollow channel 261 may be formed therebetween. Further, the core assembly 200 may include at least one insert 250 removably inserted into the hollow channel 260 of the first section to bear against the first rigid part 210 and the third rigid part 230 so as to maintain the four rigid parts 210, 220, 230, 240 of the first section in respective positions in the assembled state of the core assembly 200. The core assembly 200 may also include at least one further insert 251 removably inserted into the hollow channel 261 of the second section to bear against the fifth rigid part 211 and the seventh rigid part 231 so as to maintain the four rigid parts 211, 221, 231, 241 of the second section in respective positions in the assembled state of the core assembly 200. In the assembled state, the core assembly 200 may include an exterior surface 280 for moulding. Accordingly, the twisted duct 204 may be fabricated using the core assembly 200. Further, the rigid parts 210, 220, 230, 240, 211, 221, 231, 241 of the core assembly 200 may be configured to be collapsible such that when the respective inserts 250, 251 are removed from the respective hollow channels 260, 261, the rigid parts 210, 220, 230, 240, 211, 221, 231, 241 may collapsed toward or into the respective hollow channels 260, 261 so as to be removed piece by piece from the finished twisted duct 204. Accordingly, the rigid parts 210, 220, 230, 240, 211, 221, 231, 241 may fall apart from their respective joined configurations in the assemble state of the core assembly 200 such that the rigid parts 210, 220, 230, 240, 211, 221, 231, 241 may detach or separate from the finished twisted duct 204 for removal.

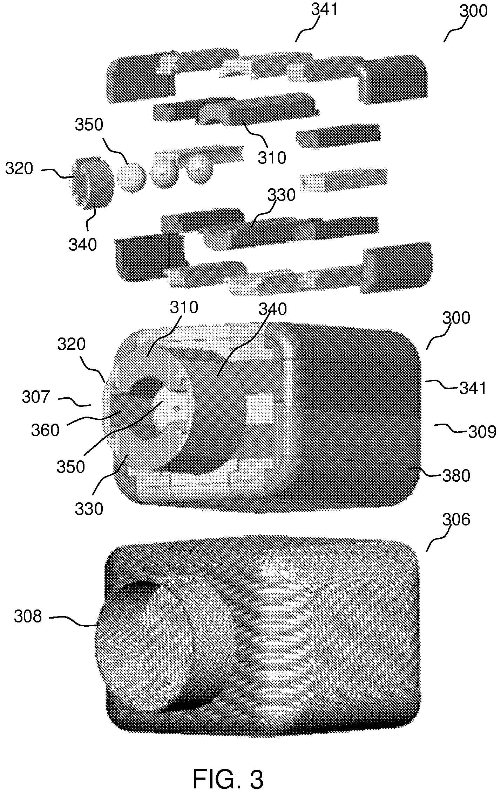

FIG. 3 shows a core assembly 300 and a container 306 with an opening 308 fabricated by the core assembly 300 according to various embodiments. As shown, the core assembly 300 may include a first rigid part 310, a second rigid part 320, a third rigid part 330 and a fourth rigid part 340 configured to be detachably joined together to form a neck section 307 of the core assembly 300, and a plurality of other rigid parts 341 configured to be detachably joined together to form a body section 309 of the core assembly 300. When the first to the fourth rigid parts 310, 320, 330, 340 are detachably joined together, a hollow channel 360 may be formed therebetween. Subsequently, the plurality of other rigid parts 341 may be then be detachably joined to the four rigid parts 310, 320, 330, 340 forming the neck section 307 of the core assembly 300. Further, the core assembly 300 may include at least one insert 350 removably inserted into the hollow channel 360 to bear against the first rigid part 310 and the third rigid part 330 so as to maintain the four rigid parts 310, 320, 330, 340 in respective positions in the assembled state of the core assembly 300. According to various embodiments, removably inserting the at least one insert 350 may also maintain the plurality of other rigid parts 341 in their respective positions in the assembled state of the core assembly 300. In the assembled state, the core assembly 300 may include an exterior surface 380 for moulding. Accordingly, the container 306 with the opening 308 may be fabricated using the core assembly 300. Further, the rigid parts 310, 320, 330, 340, 341 of the core assembly 300 may be configured to be collapsible such that when the at least one insert 350 is removed from the hollow channel 360, the rigid parts 310, 320, 330, 340, 341 may be collapsed toward or into the hollow channels 360 so as to be removed piece by piece from the finished container 306. Accordingly, the rigid parts 310, 320, 330, 340, 341 may fall apart from the joined configuration in the assembled state of the core assembly 300 such that the rigid parts 310, 320, 330, 340, 341 may detach or separate from the finished container 360.

While in the embodiments in FIG. 1A to FIG. 1D, FIG. 2 and FIG. 3 are shown to include only one hollow channel running through the respective core assembly, the core assembly according to various embodiments may also include multiple channels.

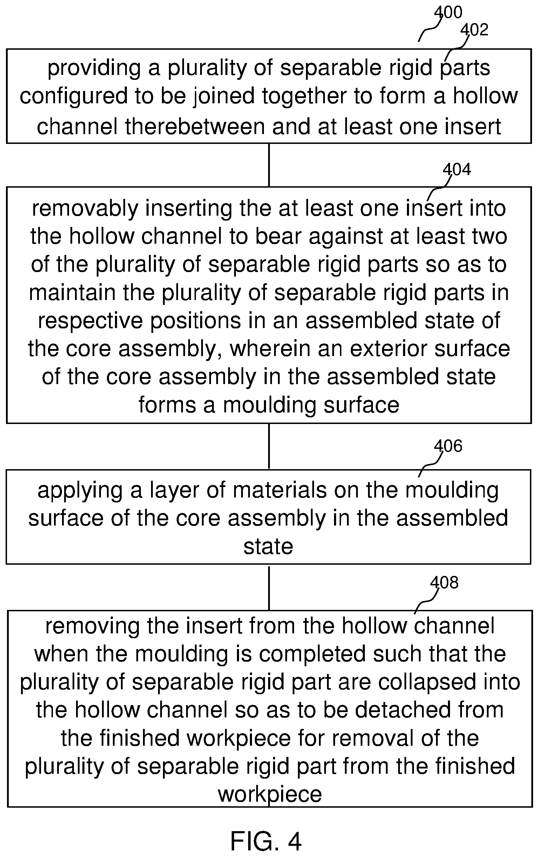

FIG. 4 shows a schematic diagram of a method 400 of moulding according to various embodiments. The method 400 may include, at 402, providing a plurality of separable rigid parts configured to be joined together to form a hollow channel therebetween and at least one insert. The method 400 may further include, at 404, removably inserting the at least one insert into the hollow channel to bear against at least two of the plurality of separable rigid parts so as to maintain the plurality of separable rigid parts in respective positions in an assembled state of the core assembly. An exterior surface of the core assembly in the assembled state may then form a moulding surface.

According to various embodiments, the method 400 may include joining the plurality of separable rigid parts of the core assembly together to form the hollow channel therebetween, and removably inserting the at least one insert of the core assembly into the hollow channel to bear against the at least two of the plurality of separable rigid parts.

According to various embodiments, the method 400 may further include, at 406, applying a layer of materials on the moulding surface of the core assembly in the assembled state. The layer of materials may include a layer of fiber and resin matrix.

According to various embodiments, the method 400 may further include, at 408, removing the insert from the hollow channel when the moulding is completed or when the workpiece is finished such that the plurality of separable rigid part are collapsed into the hollow channel so as to be detached from the finished workpiece for removal of the plurality of separable rigid part from the finished workpiece. The method may further include removing the plurality of separable rigid part piece by piece from the finished workpiece.

According to various embodiments, there is provided a core assembly for moulding. The core assembly may include a plurality of separable rigid parts configured to be joined together to form a hollow channel therebetween, and at least one insert configured to be removably insertable into the hollow channel and further configured to bear against at least two of the plurality of separable rigid parts so as to maintain the plurality of separable rigid parts in respective positions in an assembled state of the core assembly. An exterior surface of the core assembly in the assembled state may form a moulding surface.

According to various embodiments, the plurality of separable rigid parts may be further configured to be collapsible into the hollow channel when the at least one insert is removed from the hollow channel for disassembling the core assembly.

According to various embodiments, the plurality of separable rigid parts may be configured to be joined to each other in a manner that prevents the respective rigid parts from breaking apart radially away from the hollow channel.

According to various embodiments, the plurality of separable rigid parts may be configured to be joined to each other via a tongue and groove joint or a lap joint or a magnetic joint or a temporary adhesive joint or any combination thereof.

According to various embodiments, the at least one insert may include at least one ball or sphere or bearing, or at least one inflatable air bag.

According to various embodiments, the core assembly may include two or more inserts. According to various embodiments, the two or more inserts may be stringed together.

According to various embodiments, the hollow channel may include a circular cross-section.

According to various embodiments, the hollow channel may extend through an entire length of the core assembly in the assembled state.

According to various embodiments, two or more hollow channels may be formed in the core assembly in the assembled state.

According to various embodiments, the plurality of separable rigid parts may be manufactured via additive manufacturing.

According to various embodiments, the exterior surface of the core assembly in the assembled state may define a predetermined inner surface of a cavity of a workpiece to be moulded.

According to various embodiments, there is provided a method of moulding. The method may include providing a plurality of separable rigid parts configured to be joined together to form a hollow channel therebetween and at least one insert, and removably inserting the at least one insert into the hollow channel to bear against at least two of the plurality of separable rigid parts so as to maintain the plurality of separable rigid parts in respective positions in an assembled state of the core assembly. An exterior surface of the core assembly in the assembled state forms a moulding surface.

According to various embodiments, the method may further include applying a layer of materials on the moulding surface of the core assembly in the assembled state.

According to various embodiments, the method may further include removing the insert from the hollow channel when the moulding is completed such that the plurality of separable rigid part may be collapsed into the hollow channel so as to be detached from a finished workpiece for removal of the plurality of separable rigid part from the finished workpiece.

According to various embodiments, the method may further include removing the plurality of separable rigid part piece by piece from the finished workpiece.

According to various embodiments, the layer of materials may include a layer of fiber and resin matrix.

Various embodiments of the core assembly and the method have been provided which do not require expensive metal moulds and do not require messy chemicals or resin. According to various embodiments, the complex shape of the core assembly parts may be three dimensional (3D) printed in polymers or metals which may be cheaper than computer numerical control (CNC) machining. According to various embodiments, for easy removal of the inserts, e.g. bearings, a hole may be drilled through each one and a string may be used to tie all the inserts together. According to various embodiments, auxiliary inserts or bearings with slightly smaller diameter may be used to ram the inserts or bearings out from the other end of the hollow channel. According to various embodiments, computer aided design (CAD) may be used to create the core parts and a 3D printer may be used to print the parts. Accordingly, the core assembly may be created and produced in an office environment without heavy CNC machining or moulding chemicals, thus allowing quick turnaround and quick changes in the core configuration.

According to various embodiments, instead of using bearings as inserts, an inflatable tube-like air bag can also be used. According to various embodiments, the round channel may run through the entire core assembly. According to various embodiments, multi channels may also be configured in more complex configurations of the core assembly.

Various embodiments of the core assembly and method provided flexibility, low cost and quick turnaround time from initial requirements to finished product. Various embodiments do not require the CNC equipment to machine moulds or cores, and may utilise a low cost 3D printer for producing the core in-house.

Various embodiments may be differentiated from conventional technology by the center round channel, and the use of bearings which are easy to remove. Further, according to various embodiments, with the bearings removed, a space may be created to allow other, more complex parts of the core assembly according to the various embodiments to detach in a perpendicular fashion from the fabricated part. Typically, overcoming the adhesion between the core and the finished part has always been the challenge for conventional core. However, the use of bearings and a round channel in the various embodiments have partly addressed this problem.

## Claims

1. A core assembly (100, 200, 300) for moulding, the core assembly comprising:
a plurality of separable rigid parts (110, 120, 130, 140, 210, 211, 220, 221, 230, 231, 240, 241, 300, 310, 320, 330, 340, 341) configured to be joined together to form a hollow channel therebetween; and
at least one insert (150, 250, 251, 350) configured to be removably insertable into the hollow channel and further configured to bear against at least two of the plurality of separable rigid parts (110, 120, 130, 140, 210, 211, 220, 221, 230, 231, 240, 241, 300, 310, 320, 330, 340, 341) so as to maintain the plurality of separable rigid parts (110, 120, 130, 140, 210, 211, 220, 221, 230, 231, 240, 241, 300, 310, 320, 330, 340, 341) in respective positions in an assembled state of the core assembly (100, 200, 300) with a gap between the at least two of the plurality of separable rigid parts,
wherein an exterior surface of the core assembly in the assembled state forms a moulding surface; the core assembly being **characterized in that**
the plurality of separable rigid parts (110, 120, 130, 140, 210, 211, 220, 221, 230, 231, 240, 241, 300, 310, 320, 330, 340, 341) are further configured to be collapsible into the hollow channel when the at least one insert (150, 250, 251, 350) is removed from the hollow channel, by the at least two of the plurality of separable rigid parts (110, 120, 130, 140, 210, 211, 220, 221, 230, 231, 240, 241, 300, 310, 320, 330, 340, 341) being moveable towards each other because of the gap therebetween for disassembly of the core assembly (100, 200, 300).

2. The core assembly as claimed in claim 1, wherein the plurality of separable rigid parts (110, 120, 130, 140, 210, 211, 220, 221, 230, 231, 240, 241, 300, 310, 320, 330, 340, 341) are configured to be joined to each other via a tongue and groove joint or a lap joint or a magnetic joint or a temporary adhesive joint or any combination thereof.

3. The core assembly as claimed in any one of claims 1 to 2, wherein the at least one insert (150, 250, 251, 350) comprises at least one ball or sphere or bearing, or at least one inflatable air bag.

4. The core assembly as claimed in any one of claims 1 to 3, wherein the core assembly (100, 200, 300) comprises two or more inserts.

5. The core assembly as claimed in claim 4, wherein the two or more inserts (150, 250, 251, 350) are stringed together.

6. The core assembly as claimed in any one of claims 1 to 5, wherein the hollow channel comprises a circular cross-section.

7. The core assembly as claimed in any one of claims 1 to 6, wherein the hollow channel extend through an entire length of the core assembly (100, 200, 300) in the assembled state.

8. The core assembly as claimed in any one of claims 1 to 7, wherein two or more hollow channels are formed in the core assembly (100, 200, 300) in the assembled state.

9. The core assembly as claimed in any one of claims 1 to 8, wherein the plurality of separable rigid parts (110, 120, 130, 140, 210, 211, 220, 221, 230, 231, 240, 241, 300, 310, 320, 330, 340, 341) is manufactured via additive manufacturing.

10. The core assembly as claimed in any one of claims 1 to 9, wherein the exterior surface of the core assembly (100, 200, 300) in the assembled state defines a predetermined inner surface of a cavity of a workpiece to be moulded.

11. A method of moulding, the method comprising:
providing a plurality of separable rigid parts (110, 120, 130, 140, 210, 211, 220, 221, 230, 231, 240, 241, 300, 310, 320, 330, 340, 341) configured to be joined together to form a hollow channel therebetween and at least one insert (150, 250, 251, 350); and
removably inserting the at least one insert (150, 250, 251, 350) into the hollow channel to bear against at least two of the plurality of separable rigid parts (110, 120, 130, 140, 210, 211, 220, 221, 230, 231, 240, 241, 300, 310, 320, 330, 340, 341) so as to maintain the plurality of separable rigid parts (110, 120, 130, 140, 210, 211, 220, 221, 230, 231, 240, 241, 300, 310, 320, 330, 340, 341) in respective positions in an assembled state of the core assembly (100, 200, 300) with a gap between the at least two of the plurality of separable rigid parts (110, 120, 130, 140, 210, 211, 220, 221, 230, 231, 240, 241, 300, 310, 320, 330, 340, 341),
wherein an exterior surface of the core assembly (100, 200, 300) in the assembled state forms a moulding surface; and
removing the at least one insert (150, 250, 251, 350) from the hollow channel when the moulding is completed and collapsing the plurality of separable rigid parts (110, 120, 130, 140, 210, 211, 220, 221, 230, 231, 240, 241, 300, 310, 320, 330, 340, 341) into the hollow channel by the at least two of the plurality of separable rigid parts (110, 120, 130, 140, 210, 211, 220, 221, 230, 231, 240, 241, 300, 310, 320, 330, 340, 341) moving towards each other closing the gap therebetween so as to be detached from a finished workpiece for removal of the plurality of separable rigid parts (110, 120, 130, 140, 210, 211, 220, 221, 230, 231, 240, 241, 300, 310, 320, 330, 340, 341) from the finished workpiece.

12. The method as claimed in claim 11, further comprising applying a layer of materials on the moulding surface of the core assembly (100, 200, 300) in the assembled state.

13. The method as claimed in claim 11 or 12, comprising removing the plurality of separable rigid parts (110, 120, 130, 140, 210, 211, 220, 221, 230, 231, 240, 241, 300, 310, 320, 330, 340, 341) piece by piece from the finished workpiece.

14. The method as claimed in claim 12, wherein the layer of materials comprises a layer of fiber and resin matrix.

## Patentansprüche

1. Eine Kernbaugruppe (100, 200, 300) zum Formen, wobei die Kernbaugruppe aufweist:
eine Vielzahl von starren Teilen (110, 120, 130, 140, 210, 211, 220, 221, 230, 231, 240, 241, 300, 310, 320, 330, 340, 341), die so konfiguriert sind, dass sie miteinander verbindbar sind, um einen Hohlkanal dazwischen zu bilden; und
mindestens einen Einsatz (150, 250, 251, 350), der so konfiguriert ist, dass er entfernbar in den Hohlkanal einführbar ist und der ferner so konfiguriert ist, dass er gegen mindestens zwei der Vielzahl von trennbaren starren Teilen (110, 120, 130, 140, 210, 211, 220, 221, 230, 231, 240, 241, 300, 310, 320, 330, 340, 341) anlegbar ist, um die Vielzahl von trennbaren starren Teilen (110, 120, 130, 140, 210, 211, 220, 221, 230, 231, 240, 241, 300, 310, 320, 330, 340, 341) in jeweiligen Positionen in einem zusammengebauten Zustand der Kernanordnung (100, 200, 300) mit einer Lücke zwischen den mindestens zwei der Vielzahl von trennbaren starren Teilen zu halten,
wobei eine Außenfläche der Kernbaugruppe im zusammengebauten Zustand eine Formfläche bildet;
wobei die Kernbaugruppe **dadurch gekennzeichnet ist, dass**
die Vielzahl von trennbaren starren Teilen (110, 120, 130, 140, 210, 211, 220, 221, 230, 231, 240, 241, 300, 310, 320, 330, 340, 341) ferner so konfiguriert sind, dass sie in den Hohlkanal zusammenschiebbar sind, wenn der mindestens eine Einsatz (150, 250, 251, 350) aus dem Hohlkanal entfernt wird, dadurch, dass die mindestens zwei der Vielzahl von trennbaren starren Teilen (110, 120, 130, 140, 210, 211, 220, 221, 230, 231, 240, 241, 300, 310, 320, 330, 340, 341) wegen der Lücke dazwischen zum Zerlegen der Kernanordnung (100, 200, 300) aufeinander zu bewegt werden können.

2. Die Kernbaugruppe gemäß Anspruch 1, wobei die Vielzahl von trennbaren starren Teilen (110, 120, 130, 140, 210, 211, 220, 221, 230, 231, 240, 241, 300, 310, 320, 330, 340 , 341) so konfiguriert sind, dass sie über eine Nut-Feder-Verbindung oder eine Überlappungsverbindung oder eine Magnetverbindung oder eine temporäre Klebeverbindung oder eine beliebige Kombination davon miteinander verbindbar sind.

3. Die Kernbaugruppe gemäß einem der Ansprüche 1 bis 2, wobei der mindestens einen Einsatz (150, 250, 251, 350) mindestens eine Kugel oder Sphäre oder ein Lager oder mindestens einen aufblasbaren Airbag aufweist.

4. Die Kernanordnung gemäß einem der Ansprüche 1 bis 3, wobei die Kernanordnung (100, 200, 300) zwei oder mehr Einsätze aufweist.

5. Die Kernbaugruppe gemäß Anspruch 4, wobei die zwei oder mehr Einsätze (150, 250, 251, 350) aneinandergereiht sind.

6. Die Kernanordnung gemäß einem der Ansprüche 1 bis 5, wobei der Hohlkanal einen kreisförmigen Querschnitt aufweist.

7. Die Kernbaugruppe gemäß einem der Ansprüche 1 bis 6, wobei sich der Hohlkanal im zusammengebauten Zustand über eine gesamte Länge der Kernbaugruppe (100, 200, 300) erstreckt.

8. Die Kernbaugruppe gemäß einem der Ansprüche 1 bis 7, wobei im zusammengebauten Zustand zwei oder mehr Hohlkanäle in der Kernbaugruppe (100, 200, 300) ausgebildet sind.

9. Die Kernbaugruppe gemäß einem der Ansprüche 1 bis 8, wobei die Vielzahl von trennbaren starren Teilen (110, 120, 130, 140, 210, 211, 220, 221, 230, 231, 240, 241, 300, 310, 320, 330, 340, 341) durch additive Fertigung hergestellt wird.

10. Die Kernbaugruppe gemäß einem der Ansprüche 1 bis 9, wobei die Außenfläche der Kernbaugruppe (100, 200, 300) im zusammengebauten Zustand eine vorbestimmte Innenfläche eines Hohlraums eines zu formenden Werkstücks definiert.

11. Ein Verfahren zum Formen, wobei das Verfahren aufweist:
Bereitstellen einer Vielzahl von trennbaren starren Teilen (110, 120, 130, 140, 210, 211, 220, 221, 230, 231, 240, 241, 300, 310, 320, 330, 340, 341), die dazu konfiguriert sind, miteinander verbunden zu werden um zwischen sich und mindestens einem Einsatz (150, 250, 251, 350) einen Hohlkanal zu bilden; und
entfernbares Einsetzen des mindestens einen Einsatzes (150, 250, 251, 350) in den Hohlkanal, um gegen mindestens zwei der Vielzahl von trennbaren starren Teilen (110, 120, 130, 140, 210, 211, 220, 221, 230, 231, 240, 241, 300, 310, 320, 330, 340, 341) anzuliegen, um die Vielzahl von trennbaren starren Teilen (110, 120, 130, 140, 210, 211, 220, 221, 230, 231, 240, 241, 300, 310, 320, 330, 340, 341) in entsprechenden Positionen in einem zusammengebauten Zustand der Kernanordnung (100, 200, 300) mit einer Lücke zwischen den mindestens zwei der Vielzahl von trennbaren starren Teilen (110, 120, 130, 140, 210, 211, 220, 221, 230, 231, 240, 241, 300, 310, 320, 330, 340, 341) zu halten,
wobei eine Außenfläche der Kernbaugruppe (100, 200, 300) im zusammengebauten Zustand eine Formfläche bildet; und
Entfernen des mindestens einen Einsatzes (150, 250, 251, 350) aus dem Hohlkanal, wenn das Formen abgeschlossen ist, und Zusammenschieben der Vielzahl von trennbaren starren Teilen (110, 120, 130, 140, 210, 211, 220, 221, 230, 231 , 240 , 241 , 300 , 310 , 320 , 330 , 340 , 341 ) dadurch, dass sich die mindestens zwei der Vielzahl von trennbaren starren Teilen ( 110 , 120, 130, 140 , 210 , 211 ,220,221 , 230 , 231 , 240 , 241 ,300,310,320, 330 , 340 , 341 ) aufeinander zu bewegen und die Lücke dazwischen schließen, um von einem fertigen Werkstück entfernt zu werden, zum Herausnehmen der Vielzahl von trennbaren starren Teilen ( 110, 120, 130, 140, 210, 211, 220, 221, 230, 231, 240, 241, 300, 310, 320, 330, 340, 341) aus dem fertigen Werkstück.

12. Das Verfahren gemäß Anspruch 11, ferner aufweisend das Aufbringen einer Materialschicht auf die Formfläche der Kernanordnung (100, 200, 300) im zusammengebauten Zustand.

13. Das Verfahren gemäß Anspruch 11 oder 12, aufweisend das Herausnehmen der Vielzahl von trennbaren starren Teilen (110, 120, 130, 140, 210, 211, 220, 221, 230, 231, 240, 241, 300, 310, 320, 330). , 340, 341) Stück für Stück aus dem fertigen Werkstück.

14. Das Verfahren gemäß Anspruch 12, wobei die Materialschicht eine Schicht aus Fasern und eine Harzmatrix aufweist.

## Revendications

1. Ensemble noyau (100, 200, 300) pour le moulage, l'ensemble noyau comprenant :
une pluralité de parties rigides séparables (110, 120, 130, 140, 210, 211, 220, 221, 230, 231, 240, 241, 300, 310, 320, 330, 340, 341) configurées pour être jointes ensemble pour former un canal creux entre elles ; et
au moins un insert (150, 250, 251, 350) configuré pour pouvoir être inséré de manière amovible dans le canal creux et configuré en outre pour reposer contre au moins deux de la pluralité de parties rigides séparables (110, 120, 130, 140, 210, 211, 220, 221, 230, 231, 240, 241, 300, 310, 320, 330, 340, 341) de façon à maintenir la pluralité de parties rigides séparables (110, 120, 130, 140, 210, 211, 220, 221, 230, 231, 240, 241, 300, 310, 320, 330, 340, 341) dans des positions respectives dans un état assemblé de l'ensemble noyau (100, 200, 300) avec un espace entre les au moins deux de la pluralité de parties rigides séparables,
dans lequel une surface extérieure de l'ensemble noyau dans l'état assemblé forme une surface de moulage ; l'ensemble noyau étant **caractérisé en ce que**
la pluralité de parties rigides séparables (110, 120, 130, 140, 210, 211, 220, 221, 230, 231, 240, 241, 300, 310, 320, 330, 340, 341) sont en outre configurées pour être repliables dans le canal creux lorsque le au moins un insert (150, 250, 251, 350) est retiré du canal creux, par le fait qu'au moins deux de la pluralité de parties rigides séparables (110, 120, 130, 140, 210, 211, 220, 221, 230, 231, 240, 241, 300, 310, 320, 330, 340, 341) sont mobiles l'une vers l'autre en raison de l'espace entre elles pour le désassemblage de l'ensemble noyau (100, 200, 300).

2. Ensemble noyau selon la revendication 1, dans lequel la pluralité de parties rigides séparables (110, 120, 130, 140, 210, 211, 220, 221, 230, 231, 240, 241, 300, 310, 320, 330, 340, 341) sont configurées pour être jointes les unes aux autres par un joint à rainure et languette ou un joint à recouvrement ou un joint magnétique ou un joint adhésif temporaire ou une quelconque combinaison de ceux-ci.

3. Ensemble noyau selon l'une quelconque des revendications 1 et 2, dans lequel le au moins un insert (150, 250, 251, 350) comprend au moins une bille ou une sphère ou un roulement, ou au moins un coussin de sécurité gonflable.

4. Ensemble noyau selon l'une quelconque des revendications 1 à 3, dans lequel l'ensemble noyau (100, 200, 300) comprend deux inserts ou plus.

5. Ensemble noyau selon la revendication 4, dans lequel les deux inserts ou plus (150, 250, 251, 350) sont enfilés ensemble.

6. Ensemble noyau selon l'une quelconque des revendications 1 à 5, dans lequel le canal creux comprend une section transversale circulaire.

7. Ensemble noyau selon l'une quelconque des revendications 1 à 6, dans lequel le canal creux s'étend sur toute la longueur de l'ensemble noyau (100, 200, 300) à l'état assemblé.

8. Ensemble noyau selon l'une quelconque des revendications 1 à 7, dans lequel deux canaux creux ou plus sont formés dans l'ensemble noyau (100, 200, 300) à l'état assemblé.

9. Ensemble noyau selon l'une quelconque des revendications 1 à 8, dans lequel la pluralité de parties rigides séparables (110, 120, 130, 140, 210, 211, 220, 221, 230, 231, 240, 241, 300, 310, 320, 330, 340, 341) est fabriquée par fabrication additive.

10. Ensemble noyau selon l'une quelconque des revendications 1 à 9, dans lequel la surface extérieure de l'ensemble noyau (100, 200, 300) à l'état assemblé définit une surface intérieure prédéterminée d'une cavité d'une pièce à mouler.

11. Procédé de moulage, le procédé comprenant :
la fourniture d'une pluralité de parties rigides séparables (110, 120, 130, 140, 210, 211, 220, 221, 230, 231, 240, 241, 300, 310, 320, 330, 340, 341) configurées pour être jointes ensemble pour former un canal creux entre elles et au moins un insert (150, 250, 251, 350) ; et
l'insertion de manière amovible de l'au moins un insert (150, 250, 251, 350) dans le canal creux de façon qu'il repose contre au moins deux de la pluralité de parties rigides séparables (110, 120, 130, 140, 210, 211, 220, 221, 230, 231, 240, 241, 300, 310, 320, 330, 340, 341) de manière à maintenir la pluralité de parties rigides séparables (110, 120, 130, 140, 210, 211, 220, 221, 230, 231, 240, 241, 300, 310, 320, 330, 340, 341) dans des positions respectives dans un état assemblé de l'ensemble noyau (100, 200, 300) avec un espace entre les au moins deux de la pluralité de parties rigides séparables (110, 120, 130, 140, 210, 211, 220, 221, 230, 231, 240, 241, 300, 310, 320, 330, 340, 341),
dans lequel une surface extérieure de l'ensemble noyau (100, 200, 300) à l'état assemblé forme une surface de moulage ; et
le retrait de l'au moins un insert (150, 250, 251, 350) du canal creux lorsque le moulage est terminé et le repliage de la pluralité de pièces rigides séparables (110, 120, 130, 140, 210, 211, 220, 221, 230, 231, 240, 241, 300, 310, 320, 330, 340, 341) dans le canal creux par les au moins deux de la pluralité de pièces rigides séparables (110, 120, 130, 140, 210, 211, 220, 221, 230, 231, 240, 241, 300, 310, 320, 330, 340, 341) se déplaçant l'une vers l'autre en fermant l'espace entre elles de manière à être détachées d'une pièce finie pour le retrait de la pluralité de pièces rigides séparables (110, 120, 130, 140, 210, 211, 220, 221, 230, 231, 240, 241, 300, 310, 320, 330, 340, 341) de la pièce finie.

12. Procédé selon la revendication 11, comprenant en outre l'application d'une couche de matériaux sur la surface de moulage de l'ensemble noyau (100, 200, 300) à l'état assemblé.

13. Procédé selon la revendication 11 ou 12, comprenant le retrait de la pluralité de parties rigides séparables (110, 120, 130, 140, 210, 211, 220, 221, 230, 231, 240, 241, 300, 310, 320, 330, 340, 341) pièce par pièce de la pièce finie.

14. Procédé selon la revendication 12, dans lequel la couche de matériaux comprend une couche de matrice de fibres et de résine.
